# EUROPEAN PATENT SPECIFICATION

(11) **EP 2 198 650 B1**
(45) Date of publication and mention of the grant of the patent: **09.11.2011**
(21) Application number: 08807677.3
(22) Date of filing: 16.09.2008
(51) Int. Cl.: H04W 40/04, H04L 12/56

(54) **ROUTING OF A COMMUNICATION IN A WIRELESS TELECOMMUNICATIONS NETWORK**
ROUTEN EINES VERKEHRSWEGES IN EINEM DRAHTLOSEN TELEKOMMUNIKATIONSNETZ
ACHEMINEMENT D'UNE COMMUNICATION DANS UN RÉSEAU DE TÉLÉCOMMUNICATIONS SANS FIL

(30) Priority: 21.09.2007 IT TO20070661
(43) Date of publication of application: 23.06.2010
(73) Proprietor: SELEX ELSAG S.P.A., 16154 Genova (IT)
(72) Inventor: BRUNO, Vittorio, I-00182 Roma (IT); TITTONI, Patrizia, I-00142 Roma (IT); POGGI, Maurizio, I-00142 Roma (IT); DE DOMENICO, Maurizio, I-00042 Anzio (Roma) (IT); CARRIERO, Michele, I-00040 Pomezia (Roma) (IT)
(74) Representative: Deambrogi, Edgardo
(86) International application number: PCT/IB2008/053751
(87) International publication number: WO 2009/037639

(56) References cited:
- EP-A- 1 521 405
- US-A1- 2005 099 943
- US-A1- 2005 141 706
- US-A1- 2007 136 473

## Description

The present invention relates to routing protocols for wireless networks.

More specifically, the invention relates to a communication routing method for a mesh wireless telecommunication network.

Document US 2005/0099943 discloses a traffic and radio resource control in a wireless device wherein a first set of radio transmission resources is selected. A path is then searched for with respect to each destination node of the stream, each path leading from the wireless communication device to the destination node in question and fulfilling the service level requirement corresponding to that destination node.

The AODV (Ad Hoc On Demand Distance Vector) routing protocol is a routing algorithm for ad-hoc mobile networks, ie, networks formed by a group of mobile nodes connected by means of wireless connections. In this type of network all the nodes of the system collaborate to identify the optimal route along which to route data packets, i.e. the route which enables the receiver to be reached as fast as possible.

The AODV protocol allows to perform a dynamic type routing taking account of the network characteristics and load. This algorithm allows, upon request, i.e. when it is necessary to send data, to identify an optimal route from a source node to a receiver, if necessary "hopping" on one or more intermediate nodes, using a transmissive vector associated with each node. Such transmissive vectors are configured to enable communication between network nodes, for example the transmission power, modality and frequency are set.

The communication networks common to the law-enforcement agencies and used in a military setting are based either on radio systems (HF, VHF, long range wireless telephone) or on satellite systems. The nodes of such networks are mobile terminals each having a transceiver unit to perform data communication. The transceiver units are the abovementioned transmissive vectors.

The transmitting units are equipped with an interface, preferably of the LAN type (these are used in wireless networks) or the serial type (synchronous or asynchronous).

In conventional systems, the AODV algorithm is applied to mobile terminals which have only one transmitting unit. This is because the standard AODV algorithm is capable of

choosing the optimal route based on only one transmissive vector for each terminal. This limit sometimes makes transmissions between the terminals difficult, especially if malfunctioning terminals are present.

Furthermore, for the case in which the mobile terminals are vehicles used on the territory in military operations, it is not possible to quickly locate the individual units and communicate with them from a fixed base station.

An object of the present invention is therefore to propose a communication routing method capable of improving communications if there are malfunctioning terminals present.

This and other objects are achieved by a communication routing method, whose main features are defined in Claim 1.

Particular embodiments form subjects of the dependent claims.

Further subjects of the invention are: a communication network, a network node and a program for a processor as claimed.

In summary, a subject of the invention is a routing method capable of using mobile terminals having a plurality of transceiver units, of identifying the optimal route along which to route data packets and of selecting the appropriate transmitting unit, for each mobile terminal, in order to transmit data. Such a method enables terminals to automatically carry out operations for exchanging messages or alarms and also provides for tracking the movements on the territory of these terminals from a fixed base station.

The routing method according to the invention is capable of choosing, based on static and dynamic criteria described below, the route to be used to execute a transmission in a wireless mesh network. The method is also capable of choosing the most suitable transmitting unit, in each node, for transferring the data.

The method according to the invention shows a high degree of reliability and complies with Level E2 ITSEC security certifications.

Further characteristics and advantages of the invention will become clear from the following detailed description, given purely by way of non-limiting example, with reference to the appended drawings in which:
- Figure 1 is a schematic representation of a node according to the invention, and
- Figure 2 is a schematic representation of a wireless telecommunication network operating according to the method of the invention.

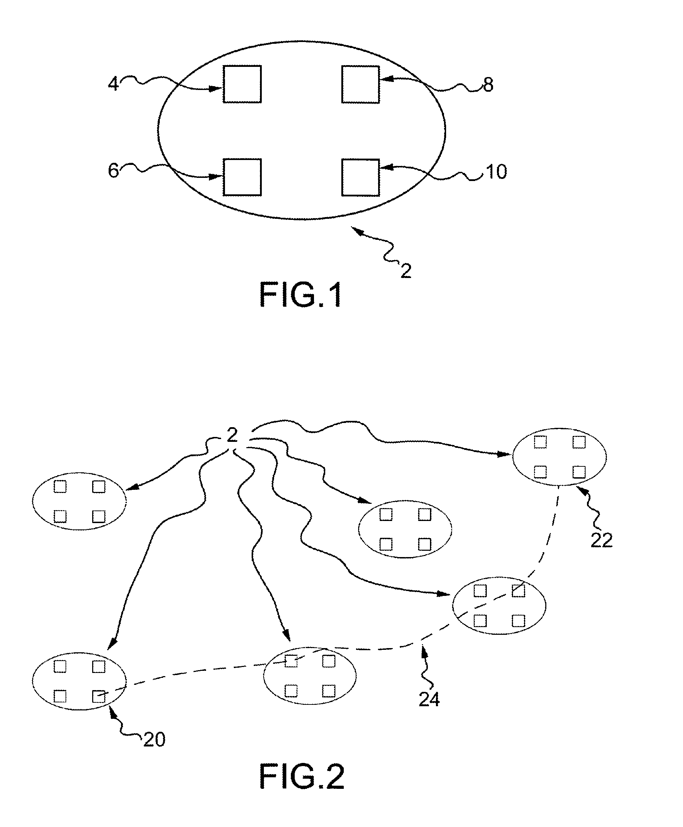

In Figure 1 a node 2 of a mesh wireless telecommunication network is schematically represented, such as a mobile terminal of the network, comprising four transceiver units 4, 6, 8, 10 arranged to transmit and receive data packets, each of the transceiver units 4, 6, 8, 10 using a predetermined transmission channel. Such a transmission channel is, preferably, of the VHF, UHF, HF, satellite terminal or long range wireless telephone type and is connected to the node 2 via a LAN or via a serial link. The number of transmitting units 4, 6, 8, 10 comprised in the node 2 is not essential for the purposes of the invention and it is conceivable to produce nodes having any number of transmitting units, using the same or different transmission channels.

In Figure 2, a diagram of a communication network is illustrated, comprising a plurality of nodes 2 of the type illustrated in Figure 1.

Let us assume that a transmitter node 20 must send data to a receiver node 22 (unicast communication). Alternatively, there may be not just one receiver node 22 but a plurality of them (multicast communication).

The method according to the invention comprises a series of operations described below which, based on static and dynamic criteria, allows to identify an optimal route 24 for reaching the receiver node 22 through some of the nodes 2 of the network.

The static criteria are criteria indicative of nominal configuration parameters of the nodes 2. Such static criteria are, preferably: the availability of the transmitting units 4, 6, 8, 10 (for example, only the HF radio type transmitting unit is used because the VHF radio type is dedicated to voice communication), the priority of use of the transmitting units (for example, the HF radio type transmitting unit is preferred because it is cheaper than a civilian satellite terminal) or the number of predefined attempts for a communication (for example, a pre-established number of attempts to use a predefined transmitting unit is executed and then there is a changeover to search for the optimal route).

The dynamic criteria are criteria indicative of current operational conditions of the nodes 2. Such dynamic criteria are, preferably: the priority of the message (for example, important messages are sent using the transmitting units considered to be the most reliable), the size of the message (for example, it may be decided to send long messages using a satellite type transmitting unit and short messages using an HF radio type transmitting unit) or the distance between the nodes 2 that must communicate (for example, if two nodes 2 are very far apart, the use of an HF radio type transmitting unit is preferred over a VHF radio type transmitting unit). Other dynamic criteria are, preferably, the state of the transmitting unit 4, 6, 8, 10 (for example, a slightly malfunctioning transmitting unit is used less than a correctly functioning transmitting unit 4, 6, 8, 10), the priority and/or criticality of the node 2 (for example, greater priority is given to the most important nodes, such as for example the control station), the historic record of the previous communication (for example, if a predetermined route was tried using the VHF radio type transmitting unit for a pre-established number of attempts and the receiver node 22 was not reached, on the next occasion another transmitting unit is used, for example the HF radio one).

The method also allows to identify, for each node 2 belonging to the optimal route 24, the transmitting unit most suited for the transmission.

The method according to the invention allows to execute all the operations in a manner that is transparent to the higher level software applications (command and control) and also allows to manage the addition, if necessary, of new transmitting units in the individual nodes 2, thus increasing the possibility of exploiting new routes to reach the receiver node 22. Such higher level applications (command and control) are programs arranged to be processed by a processor installed in each node 2 of the network and are arranged to provide a graphical user interface for sending commands and displaying the nodes 2.

The method also allows to carry out in each node 2 a voice communication with another node 2 at the same time as sending data; the method is furthermore arranged to be executed by different operating systems installed in the nodes 2. During the steps of sending data from the source node 20 to the receiver node 22, the user can decide to use one of the transmitting units 4, 6, 8, 10 to communicate vocally. In that case, if an optimal route 24 has been identified using the transmitting unit 4, 6, 8, 10 reserved by the user for the voice communication, the method searches for a new route to reach the receiver node 22 using the other available transmitting units 4, 6, 8, 10. When the transmitting unit 4, 6, 8, 10 reserved for the voice communication is freed up, it reverts to being part of the available transmitting units 4, 6, 8, 10.

The messages that are transmitted by means of the method according to the invention are preferably in XML format and comprise an initial tag which contains the following attributes:
- *Id_msg*: a sequence number identifying the message.
- *Ip*: the IP address of the transmitter node 20.
- *Ip_dest*: the IP address of the receiver; for a unicast communication it is the IP address of the receiver node 22, for a multicast communication it is the range of IP addresses of the receiver nodes 22; for a broadcast communication it is a predefined number, for example 255.
- *Priority*: a number between 0 and 9 indicating the priority of the message.
- *Equipment*: a number identifying the code of the transmissive vector in the event a particular transmitting unit 4, 6, 8, 10 for the transmission of the message is requested.
- *Cipher*: a number identifying the message encryption request.
- *Receipt*: a number identifying the request for a return receipt by the receiver node 22.
- *Deliveny_mode*: a number indicating whether the transmitter node 20 and the receiver node 22 must store the message before sending it. This number indicates whether the data item is persistent or non-persistent. A non-persistent message is a message which is overwritten if it is present in the tail of the process at the moment when another message of the same type arrives and with the same receiver. A persistent message is a message which on the other hand is not overwritten.

- *Timestamp*: date-related item; UTC time is taken into consideration in the format "yyyy-MM-ddThh:mm:ss".
- *Correlation_id*: a number identifying a message correlated with the current one.
- *Tope*: a number indicating the message type, for example a generic, location, alarm, location and alarm, emergency, or return receipt message;
- *Expiration*: the date of validity of the message; it represents the date and time of message expiry. It has the same format as the timestamp attribute.

The operations of the method are the following:
- receive the messages to be transmitted from the higher level applications (for example the messages introduced by the user via the graphical interface);
- analyze the attributes contained in the XML tags described above;
- identify the receiver node or nodes 22;
- send to the various transmitting units 4, 6, 8, 10 of the various nodes 2 an RREQ data packet in broadcast mode to search for the optimal route 24;
- receive an RREP response data packet from the receiver node(s) 22;
- encrypt the data to be transmitted, in a symmetric or asymmetric manner (this operation is optional);
- calculate and attach a digital signature to the data to be sent to the receiver node 22 (this operation is optional);
- transmit the data to the receiver node 22;
- wait for a return receipt. This operation is optional; the higher level application (command and control) knows whether or not such a receipt must be expected and enables its reception. In the event it is not received, the data are preferably resent.

The source node 20 which must send data to the receiver node 22 must initially search for the route to reach this receiver node 22.

The search for the optimal route 24 is carried out, in a manner similar to the standard AODV algorithm, by sending the RREQ packet. Such an RREQ packet, unlike in the standard AODV method, is sent to all the transmitting units 4, 6, 8, 10 present in each node 2 based on the static and dynamic criteria described above. If, for example, the armed forces prefer communicating using HF radio rather than transmissions via satellite (which might incur additional costs), the RREQ packet will be sent first to the HF radio type transmitting units and only if the search for the optimal route 24 has not yielded a positive outcome will the satellite type transmitting units be used. Similarly if, in the absence of predefined choices, it has been registered that it is impossible to communicate using the VHF radio type transmitting units (due to the presence, for example, of obstacles to the propagation of electromagnetic waves, for example a mountain between the source node 20 and the receiver node 22) in a certain number of communications, on the next communication request the RREQ packet will be sent to the various other available transmitting units, optimizing the airwave traffic. Important messages which must arrive securely at the receiver node 22 (for example an alarm) must be able to use the most reliable and fastest transmitting units to ensure the message is notified in the shortest time possible, avoiding hopping on intermediate nodes 2.

The reception of the RREP packet informs the source node 20 that the route has been found and that useful data can therefore be sent.

Known procedures can also be used to reconstruct a route in the event that the route is damaged (for example, due to the failure of an intermediate node 2).

The method according to the invention is arranged to be implemented by a system arranged to process groups or modules of programs stored on disc or accessible in a network.

Such modules comprise:
- an encryption module;
- a calculation module;
- an XML interface module interfacing with the higher level application;
- an interface module interfacing with a database containing parameters for configuring the transmitting units 4, 6, 8, 10, preferably the serial port speed, the number of such a serial port or the transmission frequencies, the number of transmitting units 4, 6, 8, 10 for each node 2, the list of static and dynamic criteria;
- a driver module for the VHF band;
- a driver module for the HF band;
- a driver module for the long range wireless telephone;
- a driver module for L-band civilian satellite equipment;
- a driver module for military satellite equipment.

These modules are arranged to communicate with the transmitting units 4, 6, 8, 10 in order to execute the method according to the invention.

Naturally, the principle of the invention remaining the same, the embodiments and details of construction may be varied widely with respect to that described and illustrated purely by way of non-limiting example, without thereby departing from the scope of protection of the present invention, which scope of protection is defined by the appended claims.

## Claims

1. A method for routing a communication comprising data packets in a mesh wireless telecommunication network including a plurality of communication nodes (2), the method comprising in combination the operations of:
a) arranging in each node (2) a plurality of transceiver units (4, 6, 8, 10) arranged to transmit and receive the data packets using a pre-established transmission channel;
b) arranging processing means, associated with each node (2) and able to process message data comprising attributes for identifying at least one transmitter node (20) and at least one receiver node (22) of the message;
c) defining for each node (2) a plurality of static criteria indicative of nominal configuration parameters of the nodes (2) and dynamic criteria indicative of current operational conditions of the nodes (2);
d) sending from the transmitter node (20) to the transceiver units (4, 6,8,10) of a plurality of intermediate receiver nodes (2), said transceiver units (4, 6, 8, 10) being selected according to the static and dynamic criteria, data querying the nodes (2) to search for at least one transmission route for the message data to the at least one receiver node (22);
e) repeating the sending of the query data from at least one of the intermediate receiver nodes (2), selected according to the static and dynamic criteria, to successive nodes in order to reach the at least one receiver node (22) thus defining an optimal route (24);
f) receiving at the transmitter node (20), through the transceiver units (4, 6, 8, 10) of the nodes (2) of the optimal route (24), response data originating from the at least one receiver node (22);
g) routing the message data along the optimal route (24), from the transmitter node (20) to the receiver node (22);
the method being **characterized in that** when a transceiver unit (4, 6, 8, 10) of a node (2) belonging to the optimal route (24) which is used for transmitting data is reserved for a voice communication, a further step of searching for a new route to reach the receiver node (22) using the other available transceiver units (4, 6, 8, 10) of said node (2) is performed, and when the transceiver unit (4, 6, 8, 10) reserved for the voice communication is freed up, it reverts to being part of the available transceiver units (4, 6, 8, 10) of said node (2).

2. The method for routing a communication according to Claim 1, further comprising the operation of:
- encrypting the message data in a symmetric modality.

3. The method for routing a communication according to Claim 1, further comprising the operation of:
- encrypting the message data in an asymmetric modality.

4. The method for routing a communication according to any one of the preceding claims, further comprising the operation of:
- calculating and attaching a digital signature to the message data.

5. The method for routing a communication according to any one of the preceding claims, wherein said static criteria are at least one among: availability of the transceiver units (4, 6, 8, 10), priority of use of the transceiver units (4, 6, 8, 10) and number of predefined attempts for the communication.

6. The method for routing a communication according to any one of the preceding claims, wherein the dynamic criteria are at least one among: priority of the message data, size of the message data, distance between the nodes (2), state of the transceiver units (4, 6, 8, 10), priority of the nodes (2), historic record of a previous communication.

7. The method for routing a communication according to any one of the preceding claims, the nodes comprising transceiver units (4,6,8,10) arranged to transmit and receive the data packets using a different pre-established transmission channel, including HF, VHF, UHF, satellite terminal and wireless telephone.

8. A network node comprising a radio base station and a mobile terminal station arranged to operate according to the method as claimed in any one of Claims 1 to 7.

9. A communication network comprising a network node according to Claim 8.

10. A processing program or group of programs, being adapted to implement a method for routing data packets according to all the steps of any of the claims 1 to 7 when executed by a processing system.

## Patentansprüche

1. Verfahren zum Routen einer Kommunikation, umfassend Datenpakete in einem Telekommunikationsnetzwerk mit drahtloser Vermaschung, umfassend eine Mehrzahl von Kommunikationsknoten (2), wobei das Verfahren in Kombination die folgenden Operationen umfasst:
a) Anordnen in jedem Knoten (2) von einer Mehrzahl von Empfängereinheiten (4, 6, 8, 10), die zum Übertragen und Empfangen der Datenpakete unter Verwendung eines zuvor etablierten Übertragungskanals angeordnet sind;
b) Anordnen von Verarbeitungsmitteln, die mit jedem Knoten (2) zusammenhängen und in der Lage sind, Nachrichtendaten, die Attribute zum Identifizieren zumindest eines Senderknotens (20) und zumindest eines Empfängerknotens (22) der Nachricht umfassen, zu verarbeiten;
c) Definieren für jeden Knoten (2) eine Mehrzahl von statischen Kriterien, die für die nominalen Konfigurationsparameter der Knoten (2) indikativ sind, und von dynamischen Kriterien, die für gegenwärtige Betriebskonditionen der Knoten (2) indikativ sind;
d) Senden vom Senderknoten (20) zu den Empfängereinheiten (4, 6, 8, 10) einer Mehrzahl von Zwischenempfängerknoten (2), wobei diese Empfängereinheiten (4, 6,8, 10) entsprechend den statischen und dynamischen Kriterien ausgewählt werden, wobei Daten die Knoten (2) auffordern, zumindest eine Übertragungsroute für die Nachrichtendaten zu dem zumindest einen Empfängerknoten (22) zu suchen;
e) Wiederholen des Sendens der Aufforderungsdaten von zumindest einem der Zwischenempfängerknoten (2), die entsprechend den statischen und dynamischen Kriterien ausgewählt werden, an aufeinanderfolgende Knoten, um den zumindest einen Empfängerknoten (22) zu erreichen, wodurch eine optimale Route (24) definiert wird;
f) Empfangen am Senderknoten (20), durch die Empfängereinheiten (4, 6, 8, 10) der Knoten (2) der optimalen Route (24), von Antwortdaten, die ihren Ursprung in dem zumindest einen Empfängerknoten (22) haben;
g) Routen der Nachrichtendaten entlang der optimalen Route (24), vom Senderknoten (20) zum Empfängerknoten (22);
wobei das Verfahren darin gekennzeichnet ist, dass, wenn eine Empfängereinheit (4, 6, 8, 10) eines Knotens (2), der zur optimalen Route (24) gehört, die zum Übertragen von Daten verwendet wird, die für eine Sprechkommunikation reserviert sind, ein weiterer Schritt des Suchens einer neuen Route durchgeführt wird, um den Empfängerknoten (22) unter Verwendung der anderen verfügbaren Empfängereinheiten (4, 6, 8, 10) dieses Knotens (2) zu erreichen, und wenn die Empfängereinheit (4, 6, 8, 10), die für die Sprechkommunikation reserviert ist, freigelegt wird, diese wieder Teil der verfügbaren Empfängereinheiten (4, 6, 8, 10) dieses Knotens (2) wird.

2. Verfahren zum Routen einer Kommunikation nach Anspruch 1, weiters umfassend die folgende Operation:
- Verschlüsseln der Nachrichtendaten in eine symmetrische Modalität.

3. Verfahren zum Routen einer Kommunikation nach Anspruch 1, weiters umfassend die folgende Operation:
- Verschlüsseln der Nachrichtendaten in eine asymmetrische Modalität.

4. Verfahren zum Routen einer Kommunikation nach einem der vorstehenden Ansprüche, weiters umfassend die folgende Operation:
- Berechnen und Anhängen einer digitalen Signatur an die Nachrichtendaten.

5. Verfahren zum Routen einer Kommunikation nach einem der vorstehenden Ansprüche, wobei die statischen Kriterien zumindest eines der Folgenden sind: Verfügbarkeit der Empfängereinheiten (4, 6, 8, 10), Benutzungspriorität der Empfängereinheiten (4, 6, 8, 10) und Anzahl der vordefinierten Versuche für die Kommunikation.

6. Verfahren zum Routen einer Kommunikation nach einem der vorstehenden Ansprüche, wobei die dynamischen Kriterien zumindest eines der Folgenden sind: Priorität der Nachrichtendaten, Größe der Nachrichtendaten, Abstand zwischen den Knoten (2), Zustand der Empfängereinheiten (4, 6, 8, 10), Priorität der Knoten (2), historische Aufzeichnung einer vorherigen Kommunikation.

7. Verfahren zum Routen einer Kommunikation nach einem der vorstehenden Ansprüche, wobei die Knoten Empfängereinheiten (4, 6, 8, 10) umfassen, die angeordnet sind, um die Datenpakete unter Verwendung eines unterschiedlichen, zuvor etablierten Übertragungskanals, einschließlich HF, VHF, UHF, Satellitenterminal- und Schnurlostelefon, zu senden und zu empfangen.

8. Netzwerkknoten, umfassend eine Funkbasisstation und eine mobile Terminalstation, die angeordnet sind, um gemäß dem Verfahren, wie es in einem der Ansprüche 1 bis 7 beansprucht wird, zu arbeiten.

9. Kommunikationsnetzwerk, umfassend einen Netzwerkknoten nach Anspruch 8.

10. Verarbeitungsprogramm oder Gruppen von Programmen, das angepasst ist / die angepasst sind, um ein Verfahren zum Routen von Datenpaketen gemäß allen Schritten jedes der Ansprüche 1 bis 7 zu implementieren, wenn es von einem Verarbeitungssystem ausgeführt wird.

## Revendications

1. Procédé pour acheminer une communication comportant des paquets de données dans un réseau de télécommunications sans fil maillé comprenant une pluralité de noeuds de communication (2), le procédé comportant, en combinaison, les opérations consistant à :
a) agencer dans chaque noeud (2) une pluralité d'unités d'émetteur-récepteur (4, 6, 8, 10) agencées pour transmettre et recevoir les paquets de données en utilisant un canal de transmission préétabli (2) ;
b) agencer un moyen de traitement, associé à chaque noeud (2) et pouvant traiter des données de message comprenant des attributs pour identifier au moins un noeud d'émetteur-récepteur (20) et au moins un noeud de récepteur (22) du message ;
c) définir pour chaque noeud (2) une pluralité de critères statiques représentatifs des paramètres de configuration nominaux des noeuds (2) et des critères dynamiques représentatifs des conditions opérationnelles courantes des noeuds (2) ;
d) envoyer à partir du noeud d'émetteur-récepteur (20) aux unités d'émetteur-récepteur (4, 6, 8, 10) d'une pluralité de noeuds de récepteur intermédiaires (2), lesdites unités d'émetteur-récepteur (4, 6, 8, 10) étant sélectionnées conformément aux critères statiques et dynamiques, des données demandant aux noeuds (2) de rechercher au moins un trajet de transmission pour les données de message vers le au moins un noeud de récepteur (22) ;
e) répéter l'envoi des données de requête à partir d'au moins l'un des noeuds de récepteur intermédiaires (2), sélectionnés conformément aux critères statiques et dynamiques, vers les noeuds successifs afin d'atteindre le au moins un noeud de récepteur (22) définissant ainsi un trajet optimal (24) ;
f) recevoir au noeud d'émetteur-récepteur (20), par l'intermédiaire des unités d'émetteur-récepteur (4, 6, 8, 10) des noeuds (2) du trajet optimal (24), des données de réponse provenant du au moins un noeud de récepteur (22) ;
g) acheminer les données de message le long du trajet optimal (24), du noeud d'émetteur-récepteur (20) au noeud de récepteur (22) ;
le procédé étant **caractérisé en ce qu'**une unité d'émetteur-récepteur (4, 6, 8, 10) d'un noeud (2) appartenant au trajet optimal (24) qui est utilisée pour transmettre des données est réservée pour une communication vocale, une autre étape de recherche d'un nouveau trajet pour atteindre le noeud de récepteur (22) en utilisant les autres unités d'émetteur-récepteur disponibles (4, 6, 8, 10) dudit noeud (2) est effectuée, et lorsque l'unité d'émetteur-récepteur (4, 6, 8, 10) réservée pour la communication vocale est libérée, elle redevient une partie des unités d'émetteur-récepteur disponibles (4, 6, 8, 10) dudit noeud (2).

2. Procédé pour acheminer une communication selon la revendication 1, comportant en outre l'opération consistant à :
- crypter les données de message selon une modalité symétrique.

3. Procédé pour acheminer une communication selon la revendication 1, comportant en outre l'opération consistant à :
- crypter les données de message selon une modalité asymétrique.

4. Procédé pour acheminer une communication selon l'une quelconque des revendications précédentes, comportant en outre l'opération consistant à :
- calculer et joindre une signature numérique aux données de message.

5. Procédé pour acheminer une communication selon l'une quelconque des revendications précédentes, dans lequel lesdits critères statiques sont au moins l'un parmi : la disponibilité des unités d'émetteur-récepteur (4, 6, 8, 10), la priorité d'utilisation des unités d'émetteur-récepteur (4, 6, 8, 10) et le nombre d'essais prédéfinis pour la communication.

6. Procédé pour acheminer une communication selon l'une quelconque des revendications précédentes, dans lequel les critères dynamiques sont au moins l'un parmi : la priorité des données de message, la taille des données de message, la distance entre les noeuds (2), l'état des unités d'émetteur-récepteur (4, 6, 8, 10), la priorité des noeuds (2), l'historique d'une communication précédente.

7. Procédé pour acheminer une communication selon l'une quelconque des revendications précédentes, les noeuds comprenant des unités d'émetteur-récepteur (4, 6, 8, 10) agencées pour transmettre et recevoir les paquets de données en utilisant un canal de transmission préétabli différent, comprenant les HF, VHF, UHF, un terminal satellite et un téléphone sans fil.

8. Noeud de réseau comprenant une station de base radio et une station de terminal mobile agencées pour fonctionner conformément au procédé selon l'une quelconque des revendications 1 à 7.

9. Réseau de communication comprenant un noeud de réseau selon la revendication 8.

10. Programme de traitement ou groupe de programmes, adapté pour mettre en oeuvre un procédé afin d'acheminer des paquets de données conformément à toutes les étapes de l'une quelconque des revendications 1 à 7, lorsqu'il est exécuté par un système de traitement.
